# EUROPEAN PATENT APPLICATION

(11) **EP 4 390 379 A1**
(43) Date of publication of application: **26.06.2024**
(21) Application number: 22875464.4
(22) Date of filing: 09.06.2022
(51) Int. Cl.: G01N 21/65, G01N 21/33, G01N 21/35, G01N 21/64, G01N 30/02, G01N 30/74, G01N 30/86, G01N 30/88

(54) **TRAINING DATA ACQUISITION METHOD, TRAINING DATA ACQUISITION SYSTEM, SOFT SENSOR CONSTRUCTION METHOD, SOFT SENSOR, AND TRAINING DATA**

(30) Priority: 30.09.2021 JP 2021162035
(71) Applicant: FUJIFILM Corporation, Tokyo 106-8620 (JP)
(72) Inventor: SUGITA, Yui, Ashigarakami-gun, Kanagawa 258-8577 (JP); NAKAMURA, Naoki, Ashigarakami-gun, Kanagawa 258-8577 (JP); MASUDA, Yu, Ashigarakami-gun, Kanagawa 258-8577 (JP)
(74) Representative: Hoffmann Eitle
(86) International application number: PCT/JP2022/023317
(87) International publication number: WO 2023/053585

(57) **Abstract**

A sample liquid in which a concentration of a specific component is known is prepared. The sample liquid and a diluent are mixed while a flow rate ratio of the sample liquid to the diluent is being continuously changed. First time-series data indicating a change in a mixing ratio and second time-series data indicating a change in spectral data are acquired for a mixed liquid obtained by the mixture while the sample liquid and the diluent are being mixed. Third time-series data indicating a change in the concentration of the specific component included in the mixed liquid is derived on the basis of the first time-series data. Learning data in which the spectral data and the concentration of the specific component are associated with each other is acquired from the second time-series data and the third time-series data.

## Description

### BACKGROUND OF THE INVENTION

### 1. Field of the Invention

The disclosed technology relates to a method for acquiring learning data, a learning data acquisition system, a method for constructing a soft sensor, a soft sensor, and learning data.

### 2. Description of the Related Art

The following technique is known as a technique related to a method for creating learning data in a learning model that estimates quantitative information of a test substance included in a sample. For example, JP2020-101543A describes that a plurality of waveforms obtained by adding random noise and a waveform indicated by spectral information of a test substance are used as spectral information (learning spectral information) of a virtual sample including the test substance and impurities and the height of a peak specified from the spectral information of the test substance, which is the basis of the generated spectral information, is used as correct answer data.

### SUMMARY OF THE INVENTION

In production of biopharmaceuticals, a protein, such as an antibody, which is a biopharmaceutical drug substance produced from cultured cells, is purified and formulated. In a protein purification step, for example, a purification treatment is continuously performed by a plurality of different chromatography methods, such as cation chromatography, anion chromatography, immunoaffinity chromatography, and gel filtration chromatography, to increase the purity of a target protein stepwise. It is preferable to monitor a purified state in order to verify whether or not the purification treatment is appropriately performed in each step. For example, the target protein finally obtained by the purification treatment can be quantified to control the switching timing of a valve for recovering the target protein. In addition, it is important to ascertain the concentration of impurities separated from the target protein in each step. The reason is that, in a case where impurities other than the target protein are mixed in a drug, the impurities are likely to affect drug efficacy and side effects even though the amount of impurities is very small. In the purification step, the purity of the target protein is increased stepwise, and the amount of impurities included in a treatment liquid treated in each step is very small. Therefore, it is not easy to quantify the impurities.

It is considered to use a soft sensor as a unit for quantifying a component included in the treatment liquid obtained in a step of producing a biopharmaceutical. The soft sensor is a sensor that estimates a parameter that is difficult to actually measure on the basis of input data that is relatively easy to actually measure. For example, a sensor that derives the concentration of a specific component included in a liquid on the basis of spectral data indicating the intensity of electromagnetic waves subjected to an action of the liquid for each wave number or each wavelength is assumed as the soft sensor that can be utilized in the step of producing a biopharmaceutical. The soft sensor is constructed by machine learning using learning data in which spectral data and the concentration of a specific component corresponding to the spectral data are associated with each other on a one-to-one basis.

It is preferable to prepare learning data covering various quality states in order to stabilize the measurement accuracy (prediction accuracy) of the soft sensor. In order to acquire the learning data, a step in which the utilization of the soft sensor is assumed (for example, a cell culture step, a purification step, and the like) is actually performed, spectral data for a treatment liquid in this step is acquired, and quality information (here, the concentration of a specific component) corresponding to the spectral data is acquired. However, in order to acquire various types of quality information, it is necessary to perform sampling from the treatment liquid a plurality of times and to perform offline analysis on the sampled treatment liquid, which requires a lot of time and effort. Further, in order to ensure the diversity of the learning data, it is necessary to acquire spectral data and quality information for a large number of batches in which processing conditions have been artificially changed. In this case, the number of offline analysis operations corresponding to the product of the number of batches and the number of sampling operations is required. In addition, since the quality of the treatment liquid depends on the process, a distribution of the quality in the learning data is likely to be limited. That is, in a case where the learning data is acquired by the sampling of the treatment liquid in the actual process, it is difficult to cover various quality states.

The disclosed technology has been made in view of the above-mentioned points, and an object of the disclosed technology is to efficiently acquire learning data used for machine learning of a soft sensor.

According to the disclosed technology, there is provided a method for acquiring learning data used for machine learning of a soft sensor that derives a concentration of a specific component included in a liquid on the basis of spectral data indicating an intensity of electromagnetic waves subjected to an action of the liquid for each wave number or each wavelength. The method comprises: preparing a sample liquid in which the concentration of the specific component is known; mixing the sample liquid and a diluent while continuously changing a flow rate ratio of the sample liquid to the diluent; acquiring first time-series data indicating a change in a mixing ratio and second time-series data indicating a change in the spectral data for a mixed liquid obtained by the mixture while the sample liquid and the diluent are being mixed; deriving third time-series data indicating a change in the concentration of the specific component included in the mixed liquid on the basis of the first time-series data; and acquiring learning data, in which the spectral data and the concentration of the specific component are associated with each other, from the second time-series data and the third time-series data.

A plurality of learning data items in which spectral data at a plurality of time points in the second time-series data is associated with the concentration of the specific component at each time point corresponding to the plurality of time points in the third time-series data may be acquired.

The spectral data may be obtained by a Raman spectrum, an infrared absorption spectrum, a fluorescence spectrum, or a UV-Vis absorption spectrum.

The first time-series data may be acquired on the basis of an absorbance, a conductivity, a hydrogen ion concentration, a refractive index, or an optical detection value of light scattering measured for the mixed liquid.

The sample liquid may be a treatment liquid subjected to a separation treatment of separating the specific component. The separation treatment may be performed by chromatography.

The specific component may be a protein. The specific component may be an impurity other than an antibody that is included in a culture solution obtained by cell culture. The impurity may include at least one of an antibody aggregate, an antibody fragment, a charge isomer, an immature sugar chain, a cell-derived protein, or cell-derived DNA.

The diluent may include the specific component included in the sample liquid. The diluent may include only a component other than the specific component included in the sample liquid.

The first time-series data may be acquired by a first sensor that is provided on a flow path through which the mixed liquid flows, and the second time-series data may be acquired by a second sensor that is provided on the flow path.

Fourth time-series data indicating a change in at least one type of measured value measured for the mixed liquid may be further acquired while the sample liquid and the diluent are being mixed, and learning data in which the measured value, the spectral data, and the concentration of the specific component are associated with one another may be acquired from the second time-series data, the third time-series data, and the fourth time-series data.

According to the disclosed technology, there is provided a learning data acquisition system for executing the above-described acquisition method. The learning data acquisition system comprises: a first flow path through which the sample liquid flows; a second flow path through which the diluent flows; a third flow path through which the mixed liquid flows; a first pump that feeds the sample liquid; a second pump that feeds the diluent; a control unit that controls the first pump and the second pump; a first sensor that is provided on the third flow path and acquires the first time-series data; a second sensor that is provided on the third flow path and acquires the second time-series data; and a recording processing unit that performs a process of recording outputs of the first sensor and the second sensor on a recording medium.

According to the disclosed technology, there is provided a method for constructing a soft sensor. The method comprises training a model of the soft sensor using learning data acquired by the above-described acquisition method.

According to the disclosed technology, there is provided a soft sensor that has been trained using learning data acquired by the above-described acquisition method.

According to the disclosed technology, there is provided learning data acquired by the above-described acquisition method.

According to the disclosed technology, it is possible to efficiently acquire learning data used for machine learning of a soft sensor.

### BRIEF DESCRIPTION OF THE DRAWINGS

Fig. 1 is a diagram illustrating an example of functions of a soft sensor according to an embodiment of the disclosed technology.
Fig. 2 is a diagram illustrating an example of a method for acquiring spectral data by Raman scattered light.
Fig. 3 is a diagram illustrating an example of learning data according to the embodiment of the disclosed technology.
Fig. 4 is a diagram illustrating an example of a configuration of a learning data acquisition system according to the embodiment of the disclosed technology.
Fig. 5 is a diagram illustrating an example of a method for feeding a sample liquid and a diluent according to the embodiment of the disclosed technology.
Fig. 6 is a diagram illustrating an example of a hardware configuration of an information processing apparatus according to the embodiment of the disclosed technology.
Fig. 7 is a flowchart illustrating an example of a flow of a process performed by executing a learning data generation program according to the embodiment of the disclosed technology.
Fig. 8 is a diagram illustrating an example of a structure of an estimation model according to the embodiment of the disclosed technology.
Fig. 9 is a flowchart illustrating an example of a flow of a process performed by executing a soft sensor construction program according to the embodiment of the disclosed technology.
Fig. 10 is a flowchart illustrating an example of a flow of a process performed by executing an estimation program according to the embodiment of the disclosed technology.
Fig. 11 is a graph illustrating comparison between a concentration of an antibody indicated by third time-series data and a concentration of the antibody actually measured by offline analysis on a sampled mixed liquid.

### DESCRIPTION OF THE PREFERRED EMBODIMENTS

Hereinafter, an example of an embodiment of the disclosed technology will be described with reference to the drawings. In addition, in each of the drawings, the same or equivalent components and portions are denoted by the same reference numerals, and a repeated description thereof will be omitted as appropriate.

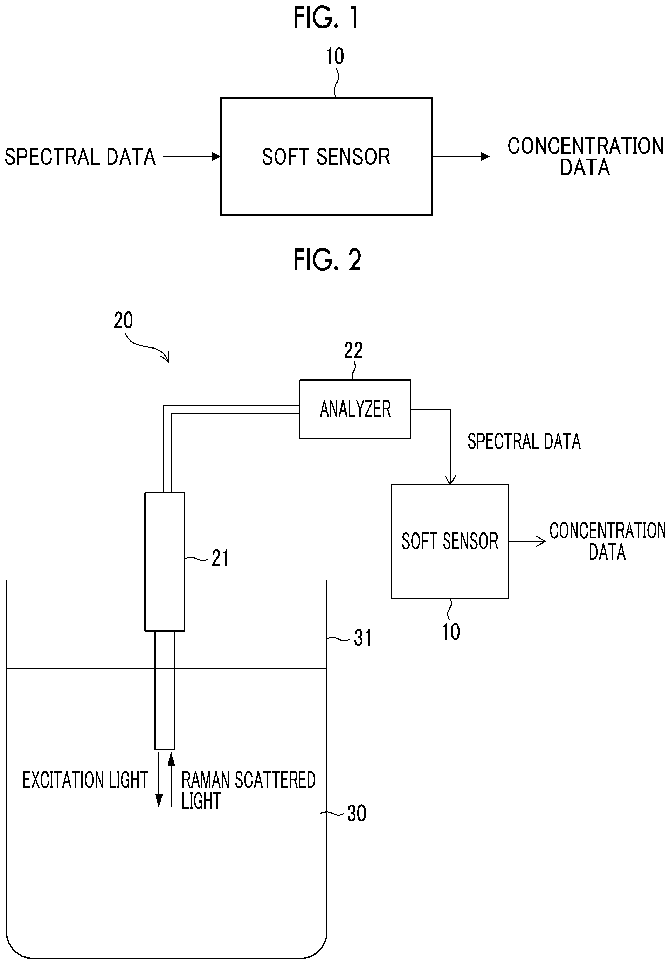

The disclosed technology relates to a method for acquiring learning data for a soft sensor. As illustrated in Fig. 1, a soft sensor 10 according to this embodiment has a function of deriving concentration data indicating an estimated value of a concentration of a specific component included in a liquid on the basis of spectral data indicating the intensity of electromagnetic waves subjected to an action of the liquid for each wave number or each wavelength. The concentration data output from the soft sensor 10 has a correlation with the spectral data. That is, the spectral data is input as an explanatory variable to the soft sensor 10, and the concentration data is output as an objective variable from the soft sensor 10. It is not easy to monitor the concentration data in line using actual measurement. The use of the soft sensor 10 makes it possible to acquire the concentration data in line on the basis of the spectral data which is relatively easy to monitor in line using actual measurement.

In this embodiment, an analysis method using Raman spectroscopy is applied to the soft sensor 10. That is, in this embodiment, spectral data by Raman scattered light is applied as the spectral data input to the soft sensor 10. The Raman spectroscopy is a spectroscopic method that evaluates a substance using the Raman scattered light. In a case where a substance is irradiated with light, the light interacts with the substance to generate Raman scattered light having a wavelength different from that of incident light. Since a difference in wavelength between the incident light and the Raman scattered light corresponds to the molecular vibration energy of the substance, the Raman scattered light having a different wavelength (wave number) can be obtained between substances having different molecular structures. In addition, it is possible to estimate various physical properties, such as stress, temperature, electrical characteristics, orientation, and crystallinity, using the Raman scattered light. Of a Stokes line and an anti-Stokes line, the Stokes line is preferably used as the Raman scattered light.

For example, the soft sensor 10 can be used to estimate the concentration of a specific component included in a treatment liquid obtained in a step of producing a biopharmaceutical. An antibody purification step is given as an example of the production step in which the soft sensor 10 is used. In this case, the "specific component" for which concentration data is to be derived by the soft sensor 10 may be, for example, a protein. This protein may be, for example, an immunoglobulin produced from cultured cells, that is, an antibody.

Fig. 2 is a diagram illustrating an example of a method for acquiring spectral data by Raman scattered light for a liquid 30. The spectral data can be acquired by a known Raman spectrophotometer 20. The Raman spectrophotometer is configured to include a probe 21 and an analyzer 22. As illustrated in Fig. 2, the tip of the probe 21 is immersed in the liquid 30 that is accommodated in a container 31. The liquid 30 is irradiated with excitation light emitted from a light emitting unit (not illustrated) that is provided at the tip of the probe 21. The Raman scattered light generated by the interaction between the excitation light and the liquid 30 is received by a light receiving unit (not illustrated) that is provided at the tip of the probe 21. The acquired Raman scattered light is decomposed for each wave number (the reciprocal of the wavelength) by the analyzer 22, and spectral data, which is a spectral intensity value for each wave number, is generated. In addition, the spectral data may be a spectral intensity value for each wavelength. The spectral data is input to the soft sensor 10. The soft sensor 10 outputs concentration data indicating an estimated value of the concentration of a specific component included in the liquid 30 on the basis of the spectral data. In addition, the spectral data can be acquired in line by irradiating the liquid 30 with excitation light through a flow cell (not illustrated) provided on a flow path through which the liquid 30 flows.

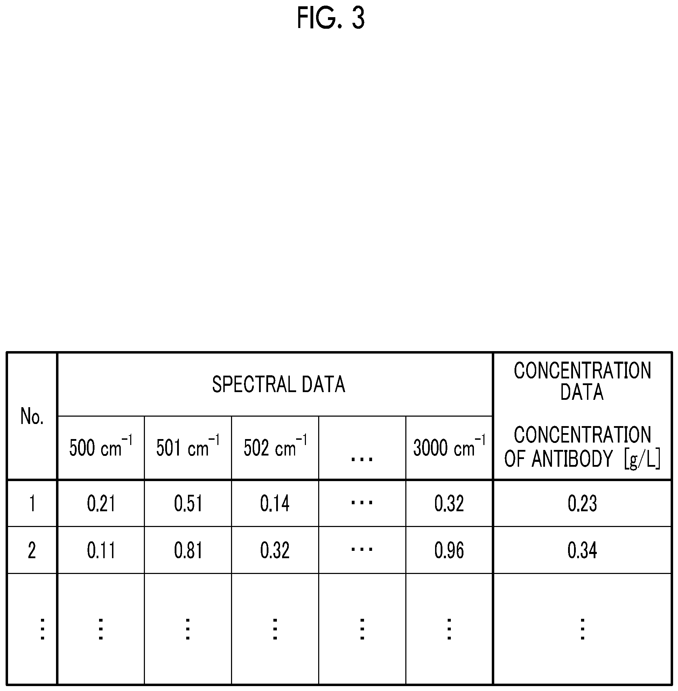

The soft sensor 10 is constructed by machine learning using a plurality of combinations of the spectral data and the concentration data as the learning data. Fig. 3 is a diagram illustrating an example of the learning data. Fig. 3 illustrates a case where the concentration data is the concentration of the antibody.

It is necessary to prepare learning data covering various quality states in order to stabilize the measurement accuracy (prediction accuracy) of the soft sensor 10. Hereinafter, a method for acquiring learning data according to the embodiment of the disclosed technology will be described. In the following description, a case where the soft sensor 10 receives spectral data by Raman scattered light as an input and derives an estimated value of the concentration of an antibody included in a liquid on the basis of the spectral data is given as an example.

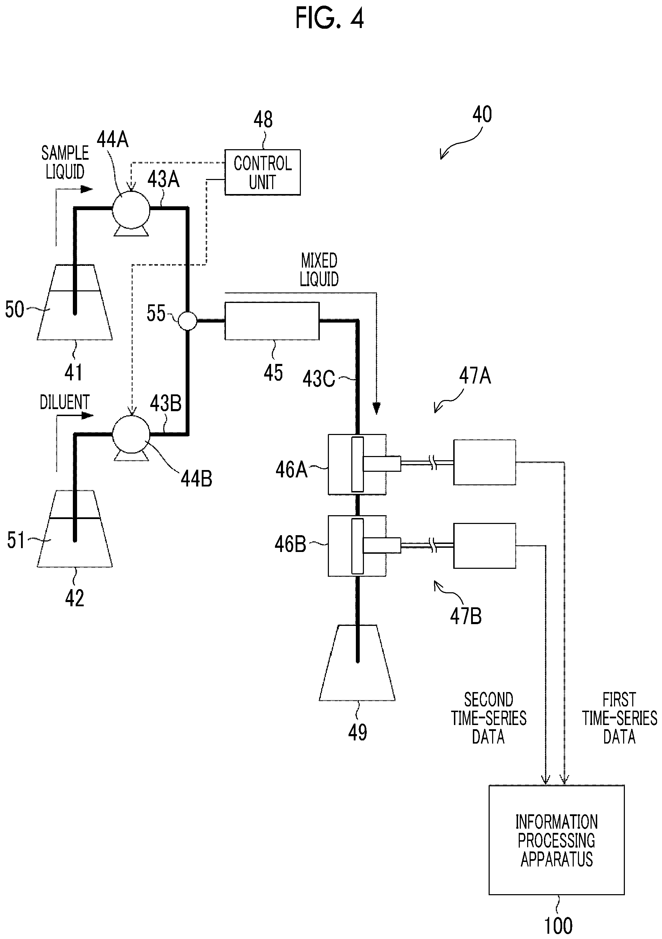

Fig. 4 is a diagram illustrating an example of a configuration of a learning data acquisition system 40 according to the embodiment of the disclosed technology. The learning data acquisition system 40 is configured to include a first container 41, a second container 42, a first flow path 43A, a second flow path 43B, a third flow path 43C, a first pump 44A, a second pump 44B, a control unit 48, a first sensor 47A, a second sensor 47B, a recovery container 49, and an information processing apparatus 100.

A sample liquid 50 is accommodated in the first container 41. The sample liquid 50 is a liquid including a "specific component" (here, an antibody) for which concentration data in the learning data is to be acquired. The concentration of the specific component (antibody) in the sample liquid 50 is known. The concentration of the antibody in the sample liquid 50 may be measured by, for example, offline analysis using high performance liquid chromatography (HPLC).

It is preferable that the sample liquid 50 includes the same components as those included in a liquid, for which concentration data is to be derived by the soft sensor 10, in addition to the specific component (antibody). For example, assuming that the soft sensor 10 is used to estimate the concentration of the antibody included in the treatment liquid in the antibody purification step, it is preferable that the sample liquid 50 is the treatment liquid subjected to a separation treatment of concentrating the antibodies from a culture solution obtained by cell culture or a liquid that simulates the treatment liquid. For example, it is preferable that the sample liquid 50 includes a buffer solution component including one or more of phosphoric acid, acetic acid, tris, and citric acid, in addition to the antibody. In addition, in a case where the antibody purification step includes a separation treatment using chromatography, it is preferable that the separation treatment is performed on the sample liquid 50 by chromatography. It is preferable that the chromatography treatment is an immunoaffinity chromatography treatment.

A diluent 51 is accommodated in the second container 42. The diluent 51 is used to change the concentration of the antibody included in the sample liquid 50. It is preferable that the diluent 51 includes components other than the "specific component" (that is, the antibody) included in the sample liquid 50. For example, the diluent 51 may include the above-described buffer solution component without including the antibody. In addition, the diluent 51 may include the "specific component" (that is, the antibody) included in the sample liquid 50. In this case, the concentration of the antibody included in the diluent 51 is required to be known. Further, the diluent 51 may include a specific impurity assumed in the actual process. In a case where the diluent 51 includes the antibody or the impurity, it is possible to obtain learning data in which the correlation balance between components has been broken and thus to improve the concentration estimation accuracy of the soft sensor 10. From this viewpoint, for both the sample liquid 50 and the diluent 51, not only the treatment liquid simply subjected to separation but also a solution to which the antibody or the impurity (which may be a preparation) has been added may be used.

The first flow path 43A is connected to the first container 41, and the sample liquid 50 flows through the first flow path 43A. The second flow path 43B is connected to the second container 42, and the diluent 51 flows through the second flow path 43B. The first pump 44A is provided on the first flow path 43A and feeds the sample liquid 50. The second pump 44B is provided on the second flow path 43B and feeds the diluent 51.

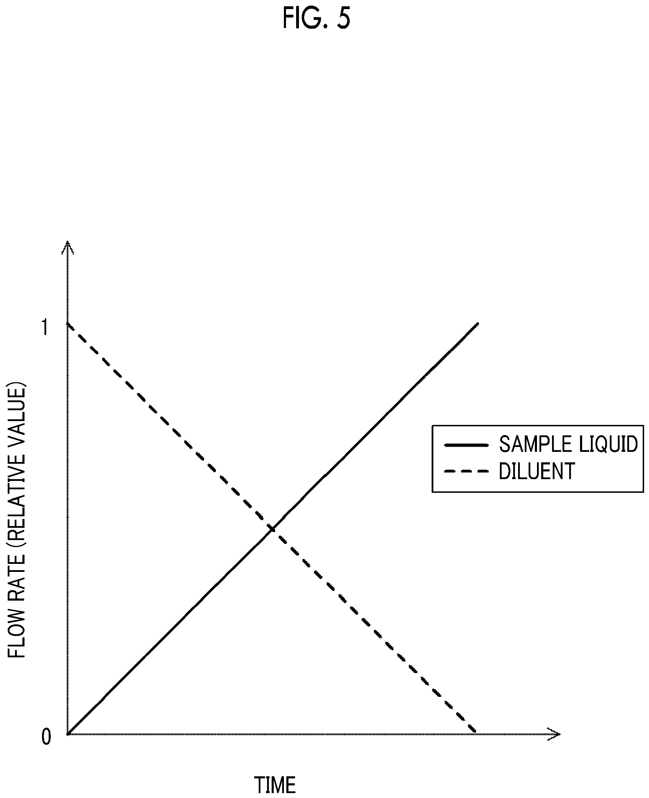

The control unit 48 controls the first pump 44A and the second pump 44B to control a flow rate of the sample liquid 50 flowing through the first flow path 43A and a flow rate of the diluent 51 flowing through the second flow path 43B. The control unit 48 controls the first pump 44A and the second pump 44B to continuously change a flow rate ratio of the sample liquid 50 to the diluent 51. More specifically, as illustrated in Fig. 5, the control unit 48 controls the feeding of the sample liquid 50 and the diluent 51 such that the flow rate ratio (A:B) changes linearly from 0:1 to 1:0 in a predetermined period (for example, 10 minutes) while keeping a total value of a flow rate A of the sample liquid 50 and a flow rate B of the diluent 51 constant (for example, at 1 mL/min). This liquid feeding is referred to as linear gradient liquid feeding. In addition, the feeding of the sample liquid 50 and the diluent 51 may be controlled such that the flow rate ratio (A:B) changes linearly from 1:0 to 0:1. Further, the flow rate ratio of the sample liquid 50 to the diluent 52 may be changed in a stepwise manner (in stages). Furthermore, the range in which the flow path ratio (A:B) is changed is not limited to the entire range from 0:1 to 1:0 and may be a partial range (for example, a range from 0.2:0.8 to 0.8: 0.2). In this case, it is preferable to cover a concentration range handled in the actual process. However, from the viewpoint of comprehensively acquiring the learning data, it is preferable that the range in which the flow rate ratio (A:B) is changed is the entire range from 0:1 to 1:0. In addition, it is preferable to perform flow path displacement liquid feeding using the sample liquid 50 and the diluent 51 before the linear gradient liquid feeding is started.

The first flow path 43A, the second flow path 43B, and the third flow path 43C are connected at a connection portion 55. The sample liquid 50 flowing through the first flow path 43A and the diluent 51 flowing through the second flow path 43B are joined and mixed at the connection portion 55. A mixed liquid obtained by the mixture of the sample liquid 50 and the diluent 51 flows through the third flow path 43C. A static mixer 45 is provided on the third flow path 43C. The sample liquid 50 and the diluent 51 included in the mixed liquid are stirred by passing through the inside of the static mixer 45. A mixing ratio of the mixed liquid flowing through the third flow path 43C continuously changes with a continuous change in the flow rate ratio (A:B) of the sample liquid 50 to the diluent 51. That is, the mixing ratio has a correlation with the flow rate ratio (A:B) of the sample liquid 50 to the diluent 51.

A first flow cell 46A and a second flow cell 46B are provided on the downstream side of the static mixer 45 on the third flow path 43C. The first sensor 47A acquires first time-series data indicating a change in the mixing ratio for the mixed liquid flowing through the first flow cell 46A. The first sensor 47A may be any sensor as long as it can output a measured value having a correlation with the mixing ratio of the sample liquid 50 to the diluent 51. For example, an ultraviolet-visible (UV-vis) spectrophotometer can be used as the first sensor 47A. The UV-vis spectrophotometer irradiates the mixed liquid flowing through the first flow cell 46A with light that has been separated for each wavelength, detects the intensity of light transmitted through the mixed liquid, and outputs the absorbance of the mixed liquid at a specific wavelength (for example, 280 nm). The absorbance output from the first sensor 47A has a correlation with the mixing ratio of the sample liquid 50 to the diluent 51 in the mixed liquid. For example, as the proportion of the sample liquid 50 included in the mixed liquid decreases, the concentration of the antibody included in the mixed liquid decreases. Therefore, the absorbance of the mixed liquid decreases. In addition, in a case where the absorbance exceeds the range according to the concentration of the mixed liquid or the linearity of the absorbance with respect to the mixing ratio is lost, the wavelength at which the absorbance is measured may be changed. The first sensor 47A outputs, as the first time-series data, a change in the absorbance of the mixed liquid which continuously changes with a continuous change in the flow rate ratio (A:B) of the sample liquid 50 to the diluent 51. The first time-series data output from the first sensor 47A is transmitted to the information processing apparatus 100.

The second sensor 47B acquires second time-series data indicating a change in the spectral data for the mixed liquid flowing through the second flow cell 46B. The spectral data is the same spectral data as that input to the soft sensor 10. For example, in a case where the soft sensor 10 receives the spectral data by the Raman scattered light as an input, the Raman spectrophotometer 20 illustrated in Fig. 2 can be used as the second sensor 47B. The second sensor 47B outputs, as the second time-series data, a change in the spectral data for the mixed liquid which continuously changes with the continuous change in the flow rate ratio (A:B) of the sample liquid 50 to the diluent 51. The second time-series data output from the second sensor 47B is transmitted to the information processing apparatus 100. In addition, the number of sampling operations in the first time-series data and the second time-series data is preferably equal to or greater than 25, more preferably equal to or greater than 50, and most preferably equal to or greater than 100. The mixed liquid that has passed through the first flow cell 46A and the second flow cell 46B is recovered to the recovery container 49.

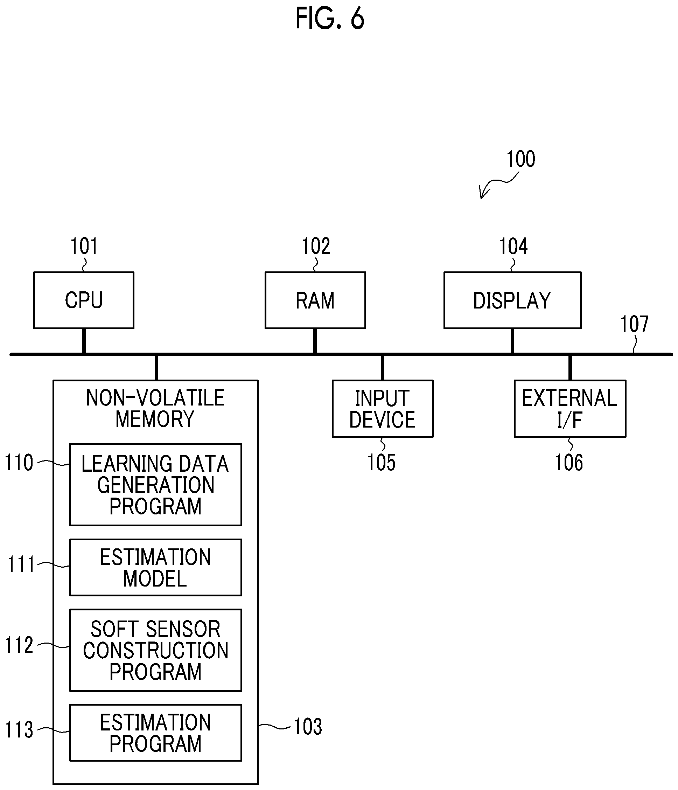

Fig. 6 is a diagram illustrating an example of a hardware configuration of the information processing apparatus 100. In addition, Fig. 6 illustrates a configuration in a case where the information processing apparatus 100 has a function of generating learning data, a function of constructing the soft sensor 10 using the learning data, and a function of operating as the soft sensor 10. Further, the information processing apparatus 100 is an example of a "recording processing unit" according to the disclosed technology.

The information processing apparatus 100 includes a central processing unit (CPU) 101, a random access memory (RAM) 102 as a temporary storage area, a non-volatile memory 103, a display 104, an input device 105, such as a keyboard and a mouse, and an external interface 106 to which the first sensor 47A and the second sensor 47B are connected. The CPU 101, the memory 102, the non-volatile memory 103, the display 104, the input device 105, and the external interface 106 are connected to a bus 107.

The non-volatile memory 103 is a non-volatile recording medium such as a hard disk drive (HDD), a solid state drive (SSD), or a flash memory. A learning data generation program 110, an estimation model 111, a soft sensor construction program 112, and an estimation program 113 are stored in the non-volatile memory 103. The learning data generation program 110 relates to a function of generating learning data. The estimation model 111 and the soft sensor construction program 112 relate to a function of constructing the soft sensor 10. The estimation program 113 relates to a function of operating as the soft sensor 10. The RAM 102 is a work memory for the CPU 101 to perform processes. The CPU 101 loads each program stored in the non-volatile memory 103 to the RAM 102 and performs the processes according to each program. In addition, the function of generating the learning data, the function of constructing the soft sensor 10 using the learning data, and the function of operating as the soft sensor 10 may be implemented by different information processing apparatuses (hardware).

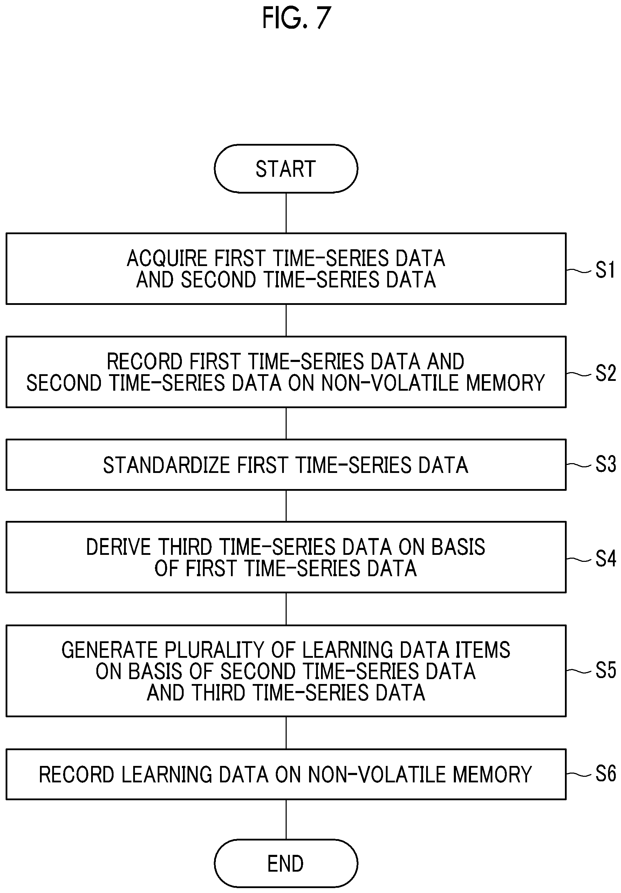

Fig. 7 is a flowchart illustrating an example of a flow of a process performed by the execution of the learning data generation program 110 by the CPU 101. The learning data generation program 110 is executed, for example, in a case where the user operates the input device 105 to input an instruction to start a process.

In Step S1, the CPU 101 acquires the first time-series data indicating a change in the mixing ratio in the mixed liquid and the second time-series data indicating a change in the spectral data for the mixed liquid from the first sensor 47A and the second sensor 47B, respectively.

In Step S2, the CPU 101 records the first time-series data and the second time-series data on the non-volatile memory 103 while giving time point information indicating time points when the first time-series data and the second time-series data were acquired. In addition, the time point information may be given by the first sensor 47A and the second sensor 47B. In this case, the time point information indicates measurement time points of the first time-series data and the second time-series data. In a case where the CPU 101 acquires the first time-series data and the second time-series data in real time, a difference between the measurement time point and the acquisition time point of the first time-series data and the second time-series data can be regarded as zero. In addition, in a case where the first sensor 47A and the second sensor 47B are disposed apart from each other, a time difference between the first time-series data and the second time-series data may be corrected on the basis of a flow path length between the sensors, the flow rate of the mixed liquid, and the like.

In Step S3, the CPU 101 standardizes the first time-series data acquired in Step S1. Specifically, the CPU 101 standardizes the absorbance output from the UV-vis spectrophotometer, which is the first sensor 47A, such that the maximum value thereof is "1". That is, "1" is assigned to the absorbance obtained at the timing when the flow rate ratio (A:B) of the sample liquid 50 to the diluent 51 is 1:0, and "0" is assigned to the absorbance obtained at the timing when the flow rate ratio (A:B) is 0:1. A numerical value that is greater than "0" and less than "1" is assigned to the absorbance obtained while the flow rate ratio (A:B) is changing from 0:1 to 1:0 according to the value of the absorbance.

In Step S4, the CPU 101 derives third time-series data indicating a change in the concentration of the antibody included in the mixed liquid on the basis of the standardized first time-series data. Specifically, the CPU 101 calculates the product (Q1 × C) of the known concentration Q1 of the antibody in the sample liquid 50 and the mixing ratio C (0 ≤ C ≤ 1) at each time point indicated by the standardized first time-series data to derive the third time-series data. The product (Q1 × C) indicates the concentration of the antibody in the mixed liquid at that time point. The third time-series data can be obtained by arranging the product (Q1 × C) in time series. Time point information is also given to the third time-series data on the basis of the time point information given to the first time-series data. In addition, preprocessing, such as time averaging, may be performed on the first time-series data and the third time-series data in order to smooth noise.

In Step S5, the CPU 101 generates learning data on the basis of the second time-series data acquired in Step S1 and the third time-series data derived in Step S4. Specifically, the CPU 101 generates a plurality of learning data items in which the spectral data at a plurality of time points in the second time-series data is associated with the concentration of the antibody at each corresponding time point in the third time-series data. The CPU 101 associates data items at the same time point in the second time-series data and the third time-series data on the basis of the time point information given to the second time-series data and the third time-series data. Therefore, it is possible to obtain a plurality of learning data items in which a combination of the spectral data and the concentration of the antibody having a correspondence relationship therebetween is a unit. In addition, in a case where there is no data at the same time point in the second time-series data and the third time-series data, a sampling point may be interpolated by linear interpolation or the like in at least one of the second time series data or the third time series data.

In Step S6, the CPU 101 records the plurality of learning data items generated in Step S5 on the non-volatile memory 103.

According to the learning data acquisition system 40, the following method for acquiring learning data is achieved. That is, the method for acquiring learning data according to the embodiment of the disclosed technique includes: mixing the sample liquid 50 in which the concentration of a specific component (antibody) is known and the diluent 51 while continuously changing the flow rate ratio of the sample liquid 50 to the diluent 51; acquiring the first time-series data indicating a change in the mixing ratio and the second time-series data indicating a change in the spectral data for a mixed liquid obtained by the mixture while the sample liquid 50 and the diluent 51 are being mixed; deriving the third time-series data indicating a change in the concentration of the specific component (antibody) included in the mixed liquid on the basis of the first time-series data; and acquiring learning data, in which the spectral data and the concentration of the specific component (antibody) are associated with each other, from the second time-series data and the third time-series data.

The learning data generated by the information processing apparatus 100 is used to construct the soft sensor 10. In this embodiment, the soft sensor 10 is constructed by the information processing apparatus 100. In addition, the soft sensor 10 may be constructed by an information processing apparatus different from the information processing apparatus used to generate the learning data.

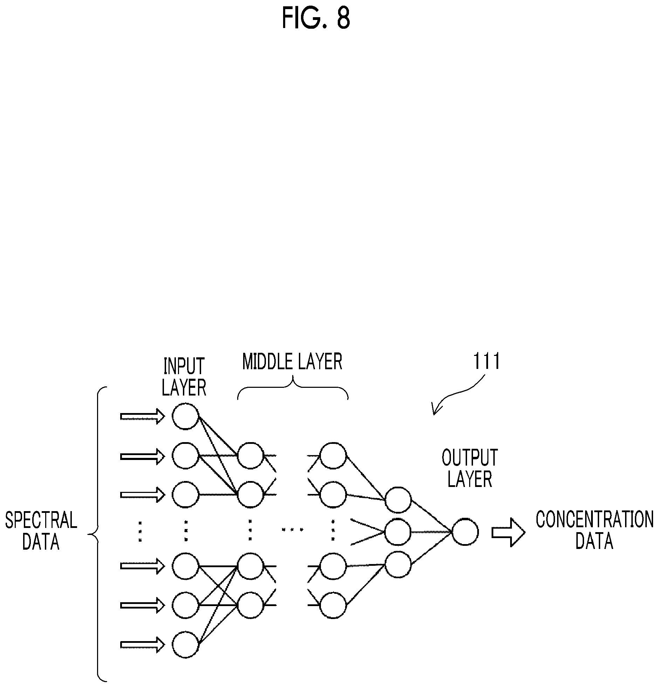

The soft sensor 10 is constructed by training the estimation model 111 using the learning data according to the soft sensor construction program 112. Fig. 8 is a diagram illustrating an example of a structure of the estimation model 111. The estimation model 111 is a neural network including an input layer, a plurality of middle layers, and an output layer. The spectral data by the Raman scattered light is input to the input layer of the estimation model 111. Concentration data corresponding to the spectral data input to the input layer is output from the output layer of the estimation model 111.

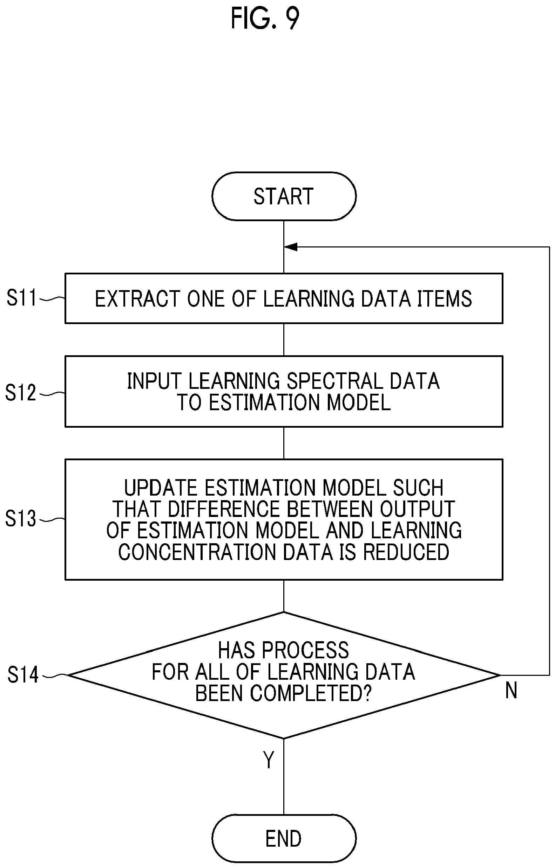

Fig. 9 is a flowchart illustrating an example of a flow of a process performed by the execution of the soft sensor construction program 112 by the CPU 101. The soft sensor construction program 112 is executed, for example, in a case where the user inputs an instruction to perform a process through the input device 105 after the learning data is acquired.

In Step S11, the CPU 101 extracts one of the plurality of learning data items recorded on the non-volatile memory 103 in Step S6 (see Fig. 7) in the learning data generation process.

In Step S12, the CPU 101 inputs learning spectral data included in the learning data extracted in Step S 11 to the estimation model 111. In addition, before the learning spectral data is input to the estimation model 111, preprocessing of learning data described in JP2020-075480 may be performed.

In Step S13, the CPU 101 updates the estimation model 111 such that a difference between the concentration data output from the estimation model 111 and learning concentration data (that is, correct answer data) included in the learning data extracted in Step S11 is reduced to train the estimation model 111. For example, a back-propagation method may be applied as a method for training the estimation model 111.

In Step S14, the CPU 101 determines whether or not the processes from Step S11 to Step S13 have been completed for all of the learning data. In a case where the CPU 101 determines that the processes have not been completed for all of the learning data, the CPU 101 returns the process to Step S 11. In a case where the processes have been completed for all of the learning data, this routine ends. The soft sensor 10 is constructed by training the estimation model 111 using the learning data.

As illustrated in Fig. 1, on the basis of the spectral data acquired for the liquid in which the concentration of the antibody is unknown, the soft sensor 10 constructed as described above can derive the estimated value of the concentration of the antibody included in the liquid. The CPU 101 executes the estimation program 113 such that the information processing apparatus 100 functions as the soft sensor 10. In addition, the function of operating as the soft sensor 10 may be implemented by an information processing apparatus that is different from the information processing apparatus used to generate the learning data and from the information processing apparatus used to construct the soft sensor 10.

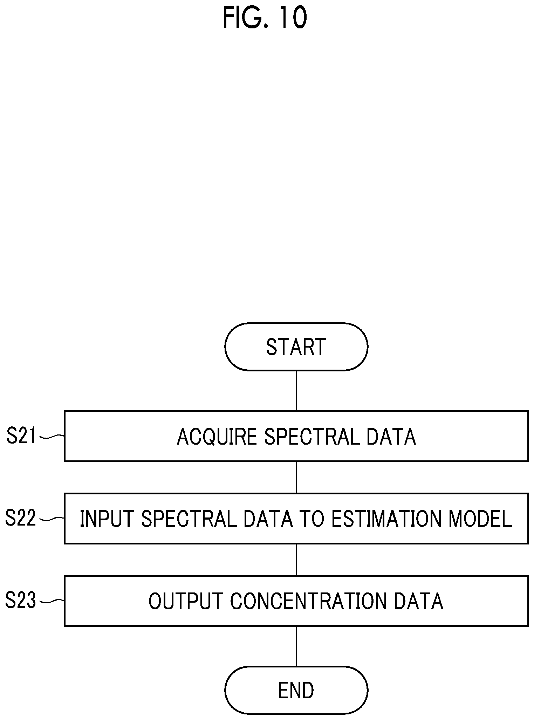

Fig. 10 is a flowchart illustrating an example of a flow of a process performed by the execution of the estimation program 113 by the CPU 101. The estimation program 113 is executed, for example, in a case where the user inputs an instruction to perform a process through the input device 105 after the soft sensor 10 is constructed.

In Step S21, the CPU 101 acquires spectral data measured using the Raman spectrophotometer or the like for the liquid in which the concentration of the antibody is unknown. The spectral data may be acquired in line, for example, in the antibody purification step.

In Step S22, the CPU 101 inputs the spectral data acquired in Step S21 to the trained estimation model 111. The trained estimation model 111 derives concentration data indicating the estimated value of the concentration of the antibody included in the liquid on the basis of the spectral data.

In Step S23, the CPU 101 outputs the concentration data derived in Step S22. The CPU 101 may perform, for example, control to display the concentration data on the display 104.

Here, the following method can be considered as a method for acquiring learning data according to a comparative example. For example, it is assumed that a step (for example, a cell culture step, a purification step, and the like) in which the utilization of the soft sensor 10 is assumed is actually performed, spectral data for a treatment liquid in this step is acquired, and quality information (that is, the concentration of the antibody) corresponding to the spectral data is acquired. However, in order to acquire the quality information, it is necessary to perform sampling from the treatment liquid a plurality of times and to perform offline analysis on the sampled treatment liquid, which requires a lot of time and effort. Further, in order to ensure the diversity of the learning data, it is necessary to acquire spectral data and quality information for a large number of batches in which processing conditions have been artificially changed. That is, the number of offline analysis operations corresponding to the product of the number of batches and the number of sampling operations needs to be performed. In addition, since the quality of the treatment liquid depends on the process, a distribution of the quality in the learning data is likely to be limited. That is, in a case where the learning data is acquired by sampling the treatment liquid in the actual process, it is not easy to cover various quality states. In order to efficiently acquire the learning data covering various quality states, it is considered that it is effective to use a dedicated system independent of the actual process. However, Patent Document 1 does not disclose the use of the dedicated system to obtain the learning spectral information.

In contrast, according to the method for acquiring learning data of the embodiment of the disclosed technology, while the sample liquid 50 and the diluent 51 are being mixed, the first time-series data indicating a change in the mixing ratio and the second time-series data indicating a change in the spectral data are acquired for the mixed liquid by in-line measurement using the first sensor 47A and the second sensor 47B, respectively. That is, the acquisition of the first time-series data and the second time-series data is automatically performed. In addition, the third time-series data indicating a change in the concentration of the antibody included in the mixed liquid is derived from the first time-series data by calculation. A plurality of learning data items can be acquired by associating data items at the same time point in the second time-series data and the third time-series data.

According to the method for acquiring learning data of the embodiment of the disclosed technology, offline analysis only needs to be performed to know the concentration of the antibody in the sample liquid 50. In addition, the learning data is generated on the basis of the time-series data acquired for the mixed liquid obtained by mixing the sample liquid 50 and the diluent 51 while continuously changing the flow rate ratio of the sample liquid 50 to the diluent 51. Therefore, it is possible to ensure the diversity of the learning data. That is, according to the method for acquiring learning data of the embodiment of the disclosed technology, it is possible to efficiently acquire the learning data used for machine learning of the soft sensor 10. According to the method for acquiring learning data of this embodiment, the number of times offline analysis is performed can be reduced to 1/7 or less of that in the method according to the above-described comparative example.

It is effective to utilize the soft sensor 10 according to this embodiment in a scene in which estimating the quality state in real time is a great advantage, for example, in the production of biopharmaceuticals. For example, the soft sensor 10 can be utilized to control the timing when the antibody eluted from a column is recovered in the antibody purification step using chromatography.

In the separation treatment using chromatography performed in the existing antibody purification step, the UV absorbance of the treatment liquid is monitored by a UV sensor, and a valve is switched at the timing when the UV absorbance is equal to or greater than a predetermined value to recover the treatment liquid including the antibody. That is, the timing when the valves is switched is controlled on the basis of the UV absorbance output from the UV sensor. However, it is difficult to distinguish between the antibody and impurities other than the antibody with the UV absorbance. Therefore, there is a concern that the valve will be switched at an inappropriate timing and the purity of the antibody will not reach a target value in the recovered treatment liquid.

The use of the soft sensor 10 according to this embodiment instead of the UV sensor makes it possible to independently estimate the concentration of the antibody even for the treatment liquid including both the antibody and the impurities. Therefore, it is possible to appropriately control the timing when the valve is switched and to recover the treatment liquid including the antibody purified with the desired purity.

In addition, for example, in a step of adsorbing the antibody to the column in the separation treatment using immunoaffinity chromatography, in a case where poor antibody adsorption has occurred due to a change in process conditions or an abnormality in the column or in a case where the antibody has been mixed in the treatment liquid passing through the column, the soft sensor 10 can quickly detect the above-described abnormality. Therefore, it is possible to prevent major rework of the process.

In addition, in the above description, the case in which the "specific component" for which concentration data is to be derived is the antibody included in the culture solution obtained by cell culture is given as an example. However, the present disclosure is not limited to this aspect. The "specific component" for which concentration data is to be derived may be impurities other than the antibody included in the culture solution. The impurities may be at least one of an antibody aggregate, an antibody fragment, a charge isomer, an immature sugar chain, a host cell protein (HCP), or cell-derived DNA. In a case where the above-described impurities are mixed in a biopharmaceutical, the impurities are likely to affect drug efficacy even though the amount thereof is very small. Therefore, it is important to quantify the concentration of the impurities in the treatment liquid obtained by a purification treatment of purifying the antibody.

In a case where the soft sensor 10 derives the estimated value of the concentration of the impurities as the concentration data, the sample liquid 50 used to acquire the learning data includes the impurities whose concentration is known. Further, in this case, a liquid that includes a buffer solution component including one or more of phosphoric acid, acetic acid, tris, and citric acid and that does not include impurities can be used as the diluent 51. A procedure of acquiring the learning data is the same as that in the case where the estimated value of the concentration of the antibody is acquired as the concentration data. That is, for the mixed liquid obtained by mixing the sample liquid 50 and the diluent 51, the first time-series data indicating a change in the mixing ratio and the second time-series data indicating a change in the spectral data for the mixed liquid are acquired from the first sensor 47A and the second sensor 47B, respectively. Then, the first time-series data is standardized. Specifically, the absorbance output from the UV-vis spectrophotometer, which is the first sensor 47A, is standardized such that the maximum value thereof is "1". Then, the third time-series data indicating a change in the concentration of the impurities included in the mixed liquid is derived on the basis of the standardized first time-series data. Specifically, the third time-series data is derived by calculating the product (Q2 × C) of the known concentration Q2 of the impurities in the sample liquid 50 and the mixing ratio C (0 ≤ C ≤ 1) at each time point indicated by the standardized first time-series data. The product (Q2 × C) indicates the concentration of the impurities in the mixed liquid at that time point. The third time-series data can be obtained by arranging the product (Q2 × C) in time series. Time point information is also given to the third time-series data on the basis of the time point information given to the first time-series data. Then, learning data is generated on the basis of the second time-series data and the third time-series data. Specifically, a plurality of learning data items in which the spectral data at a plurality of time points in the second time-series data is associated with the concentration of the impurities at each corresponding time point in the third time-series data are generated. That is, data items at the same time point in the second time-series data and the third time-series data are associated with each other on the basis of the time point information given to the second time-series data and the third time-series data. Therefore, it is possible to obtain a plurality of learning data items in which a combination of the spectral data and the concentration of the impurities having a correspondence relationship therebetween is a unit.

In addition, the "specific component" for which concentration data is to be derived may include both an antibody and impurities other than the antibody included in a culture solution. That is, the soft sensor 10 can be constructed to simultaneously derive the estimated values of the concentration of the antibody and the concentration of at least one type of impurity. In this case, the sample liquid 50 used to acquire the learning data includes the antibody whose concentration is known and at least one type of impurity whose concentration is known. Further, in this case, a liquid that includes a buffer solution component including one or more of phosphoric acid, acetic acid, tris, and citric acid and that does not include the antibody and the impurities can be used as the diluent 51. A procedure of acquiring the learning data is the same as that in the case where the estimated value of the concentration of the antibody is acquired as the concentration data. That is, for the mixed liquid obtained by mixing the sample liquid 50 and the diluent 51, the first time-series data indicating a change in the mixing ratio and the second time-series data indicating a change in the spectral data for the mixed liquid are acquired from the first sensor 47A and the second sensor 47B, respectively. Then, the first time-series data is standardized. Specifically, the absorbance output from the UV-vis spectrophotometer, which is the first sensor 47A, is standardized such that the maximum value thereof is "1". Then, the third time-series data indicating each of a change in the concentration of the antibody and a change in the concentration of the impurities included in the mixed liquid is derived on the basis of the standardized first time-series data. Specifically, the third time-series data is derived for each of the antibody and the impurities by calculating the products (Q1 × C and Q2 × C) of the known concentration Q1 of the antibody and the known concentration Q2 of the impurities in the sample liquid 50 and the mixing ratio C (0 ≤ C ≤ 1) at each time point indicated by the standardized first time-series data. The product (Q1 × C) indicates the concentration of the antibody in the mixed liquid at that time point. The product (Q2 × C) indicates the concentration of the impurities in the mixed liquid at that time point. The third time-series data can be obtained for each of the antibody and the impurities by arranging the product (Q1 × C) and the product (Q2 × C) in time series. Time point information is also given to the third time-series data on the basis of the time point information given to the first time-series data. Then, learning data is generated on the basis of the second time-series data and the third time-series data. Specifically, a plurality of learning data items in which the spectral data at a plurality of time points in the second time-series data is associated with the concentrations of the antibody and the impurities at each corresponding time point in the third time-series data are generated. That is, data items at the same time point in the second time-series data and the third time-series data are associated with each other on the basis of the time point information given to the second time-series data and the third time-series data. Therefore, it is possible to obtain a plurality of learning data items in which a combination of the spectral data and the concentrations of the antibody and the impurities having a correspondence relationship therebetween is a unit. In addition, a plurality of soft sensors 10 can also be configured to derive the estimated values of the concentrations of different components (for example, the antibody and the impurities).

Further, in the above description, the aspect in which the spectrum by the Raman scattered light is used as the spectral data input to the soft sensor 10 is given as an example. However, the present disclosure is not limited to this aspect. For example, an absorption spectrum (infrared absorption spectrum) of infrared rays emitted to a liquid may be used as the spectral data. In addition, a spectrum (fluorescence spectrum) by fluorescence generated by excitation light emitted to a liquid may be used as the spectral data. Further, an absorption spectrum (UV-Vis absorption spectrum) of UV-Vis emitted to a liquid can also be as the spectral data. However, it is preferable to use the spectrum by the Raman scattered light having a higher correlation with the concentration data.

In addition, a measured value other than the spectral data measured for the liquid for which concentration data is to be derived by the soft sensor 10 can also be added to the input data of the soft sensor 10. The measured value other than the spectral data may be, for example, a temperature, an absorbance, a conductivity, a hydrogen ion concentration, a refractive index, or an optical detection value of light scattering that is measured for the liquid for which concentration data is to be derived by the soft sensor 10. In this case, while the sample liquid 50 and the diluent 51 are being mixed, fourth time-series data indicating a change in the measured values (the temperature, the absorbance, the conductivity, the hydrogen ion concentration, the refractive index, or the optical detection value of light scattering) measured for the mixed liquid is further acquired, and learning data in which the measured value, the spectral data, and the concentration of the specific component are associated with one another is acquired from the second time-series data, the third time-series data, and the fourth time-series data. In addition, a combination of two or more of those described above as an example can also be used as the input data of the soft sensor 10. That is, the fourth time-series data may be time-series data for two or more types of measured values measured for the mixed liquid.

Further, in the above description, the case where the UV-vis spectrophotometer that outputs the absorbance of the mixed liquid is used as the first sensor 47A is given as an example. However, the present disclosure is not limited to this aspect. A sensor that outputs the conductivity, the hydrogen ion concentration, the refractive index, or the optical detection value of light scattering for the mixed liquid can also be used as the first sensor 47A. In other words, the first time-series data may be acquired on the basis of the absorbance, the conductivity, the hydrogen ion concentration, the refractive index, or the optical detection value of light scattering measured for the mixed liquid. Since all of the conductivity, the hydrogen ion concentration, the refractive index, and the optical detection value of light scattering measured for the mixed liquid have a correlation with the mixing ratio of the mixed liquid, they can be used instead of the absorbance. It is preferable to acquire the first time-series data on the basis of the absorbance among those described as an example.

Further, in the above description, the case where the association between the second time-series data and the third time-series data is performed on the basis of the time point information given to these time-series data items is given as an example. However, the present disclosure is not limited to this aspect. In a case where the first sensor 47A and the second sensor 47B are of the same type, the association can be performed without using time information. For example, in a case where both the first sensor 47A and the second sensor 47B are UV-vis spectrophotometers that output the absorbance of the mixed liquid at a specific wavelength, data items indicating the same absorbance at a common wavelength (for example, 280 nm) in the outputs of the two sensors may be associated with each other. The reason is that the absorbances at the same time and at the same wavelength output from the two sensors are equal to each other.

In addition, the learning data acquisition system 40 illustrated in Fig. 4 can be modified in various ways. For example, the probes of the first sensor 47A and the second sensor 47B may be disposed inside the static mixer 45 or may be disposed inside a chamber (not illustrated) provided in the flow path.

Further, in the above description, the case where the soft sensor 10 is constructed by machine learning is given as an example. However, the soft sensor 10 may be constructed by a multivariate analysis method such as multiple regression analysis, partial least squares (PLS), or principal component analysis (PCA).

Hereinafter, examples of the disclosed technology will be described.

### (Example 1)

Learning data for constructing the soft sensor 10 deriving an estimated value of the concentration of an antibody included in a liquid as concentration data was acquired. Further, the soft sensor 10 was constructed using the acquired learning data. The construction will be described in detail below.

### (1) Preparation of Sample Liquid

A solution obtained by removing cells from a Chinese hamster ovary (CHO) cell culture solution was used as a stock solution of the sample liquid. This solution includes impurities, such as glucose, lactic acid, amino acid, ammonia, an antibody aggregate, an antibody fragment, a charge isomer, an immature sugar chain, a cell-derived protein, and cell-derived DNA, in addition to an antibody protein produced by cells. In this example, this solution is referred to as a "culture supernatant liquid". In addition, for the establishment of CHO cells, it is possible to apply the technique described in WO2019/117136.

In this example, a separation treatment was performed by immunoaffinity chromatography using a protein A column in order to acquire a solution obtained by separating various components from the culture supernatant liquid. The protein A column is a column filled with a resin in which a protein A specifically adsorbing antibodies on a surface of porous beads is presented and is a kind of column generally used in the antibody purification step. In this example, the protein A column (Cytiva, MabSelect SuRe) was connected to a chromatography device (Cytiva, AKTA pure 25) and then used. The culture supernatant liquid was introduced from an input line of the chromatography device, and the antibody included in the liquid was specifically adsorbed on the protein A column. A liquid including impurities which had not been adsorbed on the protein A column was recovered as a "flow-through fraction liquid" from a discharge line.

Then, a washing buffer (20 mM of sodium phosphate, 150 mM of sodium chloride, pH: 7.2) was introduced from a buffer line of the chromatography device to wash away impurities that had non-specifically adsorbed on the protein A column. In this case, the solution discharged from the protein A column was recovered as a "washed fraction liquid". Finally, an elution buffer (0.1 M of sodium citrate, pH 3.0) was introduced from the buffer line of the chromatography device to desorb the antibody specifically adsorbed on the protein A column. In this case, the solution eluted from the protein A column was recovered as an "eluted fraction liquid".

A sample was taken from each of the culture supernatant liquid, the flow-through fraction liquid, the washed fraction liquid, and the eluted fraction liquid was used as the sample liquid 50. The concentration of the antibody was measured for each of these sample liquids 50 by offline analysis using HPLC. In this way, four types of sample liquids 50 in which the concentration of the antibody was known were obtained.

### (2) Acquisition of Learning Data

Learning data for constructing the soft sensor 10 was acquired for each of the four types of sample liquids 50, using the learning data acquisition system 40 illustrated in Fig. 4. The connection portion 55 at which the first flow path 43A, the second flow path 43B, and the third flow path 43C were connected was configured by a T-shaped pipe. Plunger pumps were used as the first pump 44A and the second pump 44B. AUV-vis spectrophotometer was used as the first sensor 47A. A Raman spectrophotometer (Kaiser optical systems, Kaiser Raman RXN2 Analyzer) was used as the second sensor 47B.

One of the four types of sample liquids 50 was accommodated in the first container 41, and the diluent 51 was accommodated in the second container. The washing buffer, the elution buffer, and the liquid medium for cell culture described above were used as the diluent 51. The first pump 44A and the second pump 44B were controlled such that a total flow rate of the sample liquid 50 flowing through the first flow path 43A and the diluent 51 flowing through the second flow path 43B was maintained at 1 mL/min. First, the first pump 44A and the second pump 44B were controlled such that the flow rate ratio (A:B) which was the ratio of the flow rate A of the sample liquid 50 to the flow rate B of the diluent 51 was 0: 1. After liquid feeding was stabilized, the first pump 44A and the second pump 44B were controlled such that the flow rate ratio (A:B) was changed linearly from 0:1 to 1:0 for 20 minutes.

During the liquid feeding, absorbance at a wavelength of 280 nm was measured for the mixed liquid of the sample liquid 50 and the diluent 51 flowing through the third flow path 43C by the UV-vis spectrophotometer which was the first sensor 47A. A change in the absorbance that changed with a change in the flow rate ratio (A:B) was acquired as the first time-series data. In addition, during the liquid feeding, spectral data by Raman scattered light was acquired for the mixed liquid flowing through the third flow path 43C by the Raman spectrophotometer which was the second sensor 47B. In a case where the spectral data was acquired, a laser output was 200 mW, an excitation wavelength was 785 nm, an exposure time was 1 second, and the number of integration operations was 15. A change in the spectral data that changed with a change in the flow rate ratio (A:B) was acquired as the second time-series data. The first time-series data and the second time-series data were given time point information indicating the time points when the first time-series data and the second time-series data were acquired and then recorded on the non-volatile memory 103 comprised in the information processing apparatus 100. In addition, in order to verify that a change in the concentration of the antibody in the mixed liquid could be estimated from the first time-series data, 1 mL of the mixed liquid was sampled from the discharge line a plurality of times during the liquid feeding, and the concentration of the antibody was measured for each sample by offline analysis using HPLC. This verification may be performed as necessary and can be omitted. For the remaining three types of sample liquids 50, the first time-series data and the second time-series data were acquired according to the same procedure as described above.

The absorbance at each time point indicated by the first time-series data was standardized such that the maximum value thereof was "1". Then, the product (Q1 × C) of the known concentration Q1 of the antibody in the sample liquid 50 and the mixing ratio C (0 ≤ C ≤ 1) indicated by the standardized first time-series data was calculated to derive third time-series data. That is, the third time-series data was acquired by arranging the product (Q1 × C) in time series.

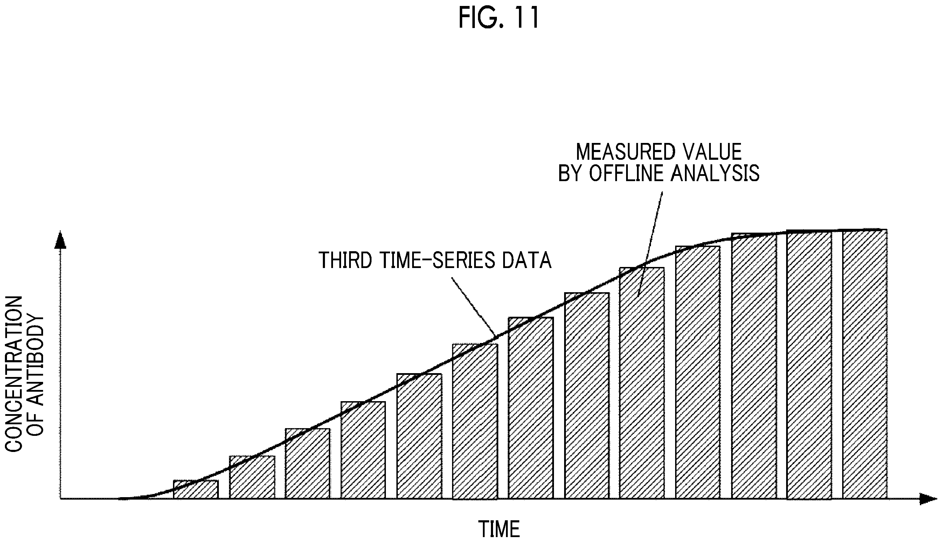

Fig. 11 is a graph illustrating comparison between the concentration of the antibody indicated by the third time-series data and the concentration of the antibody actually measured by offline analysis on the sampled mixed liquid. As illustrated in Fig. 11, since the result showing that the two concentrations were substantially equal to each other was obtained, it was verified that the concentration of the antibody could be estimated from the first time-series data.

Then, the spectral data at a plurality of time points in the second time-series data was associated with the concentration of the antibody at each corresponding time point in the third time-series data. Specifically, data items at the same time point in the second time-series data and the third time-series data were associated with each other on the basis of the time point information given to the second time-series data and the third time-series data. In this case, in the second time-series data and the third time-series data, sampling points were interpolated by linear interpolation, and the association was performed. Therefore, a plurality of learning data items in which a combination of the spectral data and the concentration of the antibody having a correspondence relationship therebetween was a unit were generated.

### (3) Construction of Soft Sensor

The estimation model 111 was trained using the plurality of learning data items generated as described above according to the procedure indicated by the flowchart illustrated in Fig. 9 to construct the soft sensor 10.

A separation treatment by immunoaffinity chromatography using the protein A column was performed on a culture lot different from the culture lot of the sample liquid 50, using the constructed soft sensor 10. Here, during elution, gradient elution continuously switching from the washing buffer to the elution buffer was performed in a range of 10 CV Here, CV indicates the volume of the protein A column. During an eluting step, a Raman spectrum was collected using the flow cell installed in the flow path. At the same time, 0.5 CV of eluate was sampled using a fraction collector. The collected spectrum was used as an input, and the estimated value of the concentration of the antibody was derived by the soft sensor 10. In addition, the concentration of the antibody was measured for each of the recovered eluted fraction liquids by offline analysis using HPLC. A determination coefficient R² and a root mean square error (RMSE) were acquired in order to evaluate the accuracy of the estimated value of the concentration of the antibody in the soft sensor 10 with respect to the measured value of the eluted fraction liquid acquired at the measurement time. In the soft sensor 10 constructed by the method according to this example, the determination coefficient R² was 0.99, and the RMSE was 0.39.

### (Example 2)

Learning data for constructing the soft sensor 10 deriving an estimated value of the concentration of a host cell protein (HCP), which was a kind of impurity included in a liquid, as the concentration data was acquired. Further, the soft sensor 10 was constructed using the acquired learning data. The construction will be described in detail below.

### (1) Preparation of Sample Liquid

As in Example 1, a sample was taken from each of a culture supernatant liquid and a flow-through fraction liquid, a washed fraction liquid, and an eluted fraction liquid obtained by a separation treatment with immunoaffinity chromatography using the protein A column was set as the sample liquid 50. The concentration of the HCP was measured for each of these sample liquids 50 by offline analysis using HPLC. The concentration of the HCP was measured using a 360-HCP ELISA kit (Cosmo Bio Co., Ltd). In this way, four types of sample liquids 50 in which the concentration of the HCP was known were obtained.

### (2) Acquisition of Learning Data

As in Example 1, learning data was acquired for each of the four types of sample liquids 50 by the learning data acquisition system 40 illustrated in Fig. 4. That is, the first time-series data and the second time-series data were acquired for the mixed liquid, and the product (Q2 × C) of the mixing ratio C (0 ≤ C ≤ 1) at each time point indicated by the standardized first time-series data and the known concentration Q2 of the HCP in the sample liquid 50 was arranged in time series to acquire the third time-series data. Then, spectral data at a plurality of time points in the second time-series data was associated with the concentration of the HCP at each corresponding time point in the third time-series data. Therefore, a plurality of learning data items in which a combination of the spectral data and the concentration of the HCP having a correspondence relationship there between was a unit were generated.

### (3) Construction of Soft Sensor

The estimation model 111 was trained using the plurality of learning data items generated as described above according to the procedure indicated by the flowchart illustrated in Fig. 9 to construct the soft sensor 10.

A separation treatment by immunoaffinity chromatography using the protein A column was performed on a culture lot different from the culture lot of the sample liquid 50 using the constructed soft sensor 10. Here, during elution, gradient elution continuously switching from the washing buffer to the elution buffer was performed in a range of 10 CV During an eluting step, a Raman spectrum was collected using the flow cell installed in the flow path. At the same time, 0.5 CV of eluate was sampled using a fraction collector. The collected spectrum was used as an input, and the estimated value of the concentration of the HPC was derived by the soft sensor 10. Further, the concentration of the HCP was measured for the sampled eluted fraction liquid by offline analysis using HPLC. The determination coefficient R² and the RMSE were acquired in order to evaluate the accuracy of the estimated value of the concentration of the HCP in the soft sensor 10 with respect to the measured value. In the soft sensor 10 constructed by the method according to this example, the determination coefficient R² was 0.96 and the RMSE was 34.11.

### (Comparative Example)

In this comparative example, learning data was acquired by a method mainly based on offline analysis on a treatment liquid sampled in the antibody purification step, and the soft sensor 10 was constructed using the acquired learning data.

In this comparative example, a separation treatment by immunoaffinity chromatography using the protein A column was performed on a culture supernatant liquid of CHO cells. The protein A column (Cytiva, MabSelect SuRe) was connected to a chromatography device (Cytiva, AKTA pure 25) and then used.

In this comparative example, an acidic eluate was introduced from a buffer line of the chromatography device to desorb the antibody specifically adsorbed on the protein A column. In this case, the acidic eluate was introduced in a gradient shape with a concentration gradient, instead of being switched stepwise (gradient elution). The conditions of the gradient elution were set to three patterns as follows. In a case where the volume of the protein A column was represented by CV, gradient elution was performed using 5 CV, 10 CV, and 15 CV of eluate. For each of the above-described patterns, a spectrum by Raman scattered light was measured at a plurality of time points during a process operation. In addition, an eluted fraction liquid was sampled at a plurality of time points during the process operation, and the concentration of the antibody was acquired for the sampled eluted fraction liquid by offline analysis. A plurality of learning data items were acquired by associating spectrums at a plurality of time points during the process operation with the concentrations of the antibody at the corresponding time points.

The soft sensor 10 was constructed by training the estimation model 111 using the plurality of learning data items acquired as described above. The separation treatment by immunoaffinity chromatography using the protein A column was performed on a culture lot different from the culture lot used to acquire the learning data, using the soft sensor 10. Here, during elution, gradient elution continuously switching from the washing buffer to the elution buffer was performed in a range of 10 CV During an eluting step, a Raman spectrum was collected using the flow cell installed in the flow path. At the same time, 0.5 CV of eluate was sampled using a fraction collector. The collected spectrum was used as an input, and the estimated value of the concentration of the antibody was derived by the soft sensor 10. In addition, the concentration of the antibody was measured for the sampled eluted fraction liquid by offline analysis using HPLC. The determination coefficient R² and the RMSE were acquired in order to evaluate the accuracy of the estimated value of the concentration of the antibody in the soft sensor 10 with respect to the measured value. In the soft sensor 10 constructed by the method according to this comparative example, the determination coefficient R² was 0.98, and the RMSE was 0.53.

From the above results, it can be said that the accuracy of the soft sensor 10 constructed using the learning data acquired by the method according to the disclosed technology is equal to that of the soft sensor 10 constructed using the learning data acquired by the method according to the comparative example mainly based on offline analysis.

In addition, the disclosure of JP2021-162035 filed on September 30, 2021 is incorporated herein by reference in its entirety. Further, all documents, patent applications, and technical standards described in the specification are incorporated herein by references to the same extent as the incorporation of the individual documents, patent applications, and technical standards by references are described specifically and individually.

## Claims

1. A method for acquiring learning data used for machine learning of a soft sensor that derives a concentration of a specific component included in a liquid on the basis of spectral data indicating an intensity of electromagnetic waves subjected to an action of the liquid for each wave number or each wavelength, the method comprising:
preparing a sample liquid in which the concentration of the specific component is known;
mixing the sample liquid and a diluent while continuously changing a flow rate ratio of the sample liquid to the diluent;
acquiring first time-series data indicating a change in a mixing ratio and second time-series data indicating a change in the spectral data for a mixed liquid obtained by the mixture while the sample liquid and the diluent are being mixed;
deriving third time-series data indicating a change in the concentration of the specific component included in the mixed liquid on the basis of the first time-series data; and
acquiring learning data, in which the spectral data and the concentration of the specific component are associated with each other, from the second time-series data and the third time-series data.

2. The acquisition method according to claim 1,
wherein a plurality of learning data items in which spectral data at a plurality of time points in the second time-series data is associated with the concentration of the specific component at each time point corresponding to the plurality of time points in the third time-series data are acquired.

3. The acquisition method according to claim 1 or 2,
wherein the spectral data is obtained by a Raman spectrum, an infrared absorption spectrum, a fluorescence spectrum, or a UV-Vis absorption spectrum.

4. The acquisition method according to any one of claims 1 to 3,
wherein the first time-series data is acquired on the basis of an absorbance, a conductivity, a hydrogen ion concentration, a refractive index, or an optical detection value of light scattering measured for the mixed liquid.

5. The acquisition method according to any one of claims 1 to 4,
wherein the sample liquid is a treatment liquid subjected to a separation treatment of separating the specific component.

6. The acquisition method according to claim 5,
wherein the separation treatment is performed by chromatography.

7. The acquisition method according to any one of claims 1 to 6,
wherein the specific component is a protein.

8. The acquisition method according to any one of claims 1 to 7,
wherein the specific component is an impurity other than an antibody that is included in a culture solution obtained by cell culture.

9. The acquisition method according to claim 8,
wherein the impurity includes at least one of an antibody aggregate, an antibody fragment, a charge isomer, an immature sugar chain, a cell-derived protein, or cell-derived DNA.

10. The acquisition method according to any one of claims 1 to 9,
wherein the diluent includes the specific component included in the sample liquid.

11. The acquisition method according to any one of claims 1 to 9,
wherein the diluent includes only a component other than the specific component included in the sample liquid.

12. The acquisition method according to any one of claims 1 to 11,
wherein the first time-series data is acquired by a first sensor that is provided on a flow path through which the mixed liquid flows, and
the second time-series data is acquired by a second sensor that is provided on the flow path.

13. The acquisition method according to any one of claims 1 to 12,
wherein fourth time-series data indicating a change in at least one type of measured value measured for the mixed liquid is further acquired while the sample liquid and the diluent are being mixed, and
learning data in which the measured value, the spectral data, and the concentration of the specific component are associated with one another is acquired from the second time-series data, the third time-series data, and the fourth time-series data.

14. A learning data acquisition system for executing the acquisition method according to any one of claims 1 to 13, the learning data acquisition system comprising:
a first flow path through which the sample liquid flows;
a second flow path through which the diluent flows;
a third flow path through which the mixed liquid flows;
a first pump that feeds the sample liquid;
a second pump that feeds the diluent;
a control unit that controls the first pump and the second pump;
a first sensor that is provided on the third flow path and acquires the first time-series data;
a second sensor that is provided on the third flow path and acquires the second time-series data; and
a recording processing unit that performs a process of recording outputs of the first sensor and the second sensor on a recording medium.

15. A method for constructing a soft sensor, the method comprising:
training a model of the soft sensor using learning data acquired by the acquisition method according to any one of claims 1 to 13.

16. A soft sensor that has been trained using learning data acquired by the acquisition method according to any one of claims 1 to 13.

17. Learning data acquired by the acquisition method according to any one of claims 1 to 13.
